# EUROPEAN PATENT SPECIFICATION

(11) **EP 3 153 536 B1**
(45) Date of publication and mention of the grant of the patent: **11.05.2022**
(21) Application number: 15188723.9
(22) Date of filing: 07.10.2015
(51) Int. Cl.: C08G 59/40, C08G 59/62, C07F 9/6571

(54) **LOW DK PHOSPHOROUS CONTAINING HARDENER USEFUL FOR HALOGEN FREE, FLAME RETARDANT POLYMERS AND USE**
HÄRTER MIT PHOSPHOR MIT GERINGER DK FÜR HALOGENFREIE, FLAMMHEMMENDE POLYMERE UND VERWENDUNG
DURCISSEUR CONTENANT DU PHOSPHORE À FAIBLE DK UTILE POUR DES POLYMÈRES IGNIFUGEANTS, SANS HALOGÈNE ET LEUR UTILISATION

(43) Date of publication of application: 12.04.2017
(73) Proprietor: Nan-Ya Plastics Corporation, Taipei (TW)
(72) Inventor: LEE, Cheng-Chung, Taipei (TW); WU, Chen-Hua, Taipei (TW)
(74) Representative: Viering, Jentschura & Partner mbB Patent- und Rechtsanwälte

(56) References cited:
- WO-A1-2013/000158
- WO-A2-2010/114302
- US-A1- 2013 154 125
- US-A1- 2015 072 583
- US-B2- 8 124 716

## Description

### FIELD OF THE INVENTION

The fire-retardant hardener made here can be used as a raw material for epoxy resin or cyanate ester resin or as a hardener for epoxy resin. Such a fire-retardant hardener can be used as an insulated material or an adhesive or paint for electronic components that must meet very respectable requirements, such as a laminated board covered with copper foil, EMC encapsulation and so forth.

### BACKGROUND OF THE INVENTION

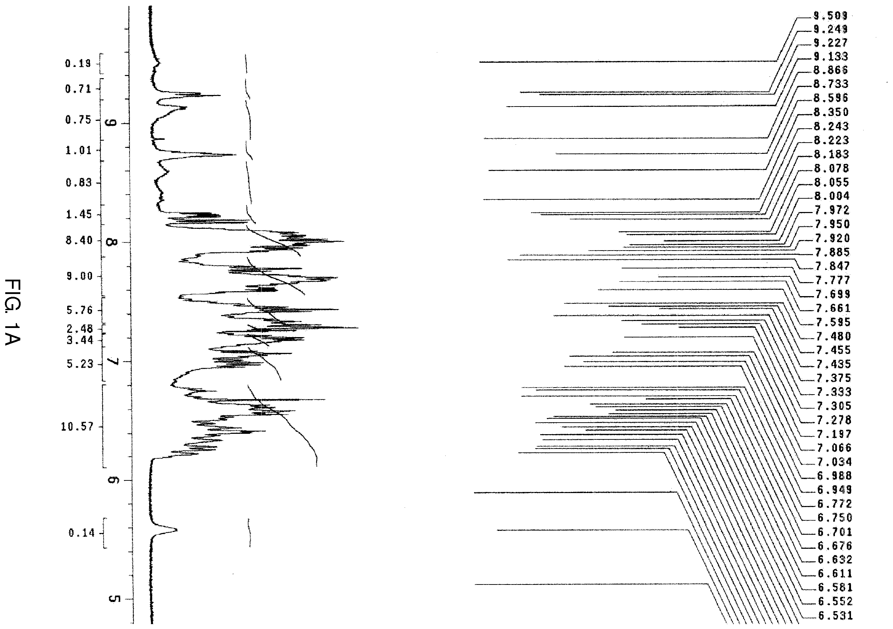

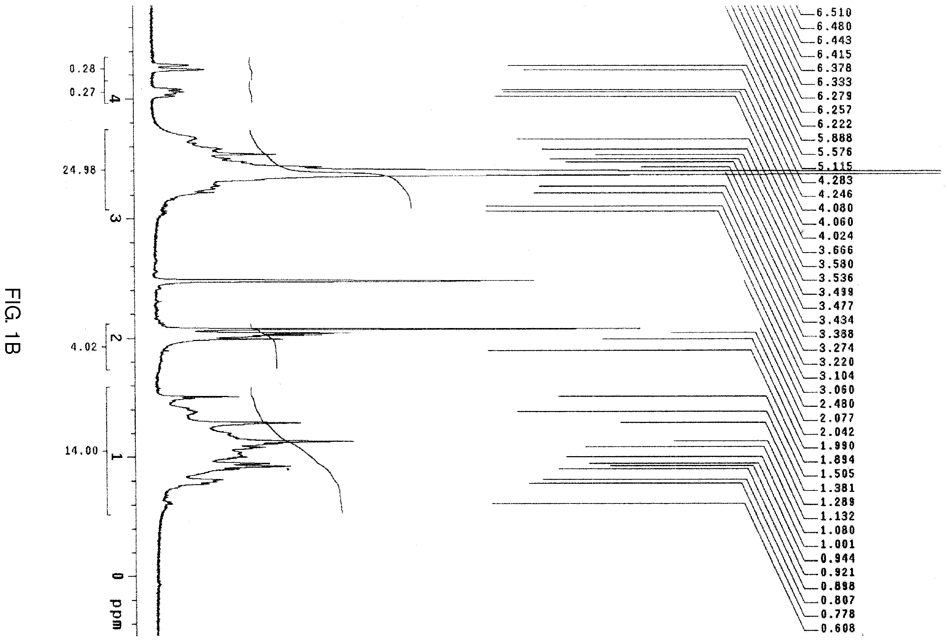

The present invention provides a high-performance phosphorous-containing hardener with excellent flame retardant and heat resistant characteristics, as well as a low dielectric constant with the following formula disclosed (see FIG. 1A and FIG. 1B). When the phosphorous-containing hardener is formulated with compositions for laminate, it can pass the UL-94V0 flame retardant test, with the value of the dielectric constant being 4.0 (1 GHz), and does not experience delamination with 10 minutes of dipping in a 288°C soldering test after two hours of the pressure cooking test.

This phosphorous-containing hardener may be used as a raw material for epoxy resin or cyanate resin or as a hardener for epoxy resin. It can be used in a variety of applications, including, for example, insulating materials for highly reliable electronic components, such as EMC, PCB substrates, laminate and insulating plates that require excellent flame-retardant characteristics and thermal stability, adhesives, coating agents, and paint.

### TECHNICAL FIELD

This invention consists of a new low-dielectric halogen-free phosphorous phenolic resin chemical compound. It can be applied to glass fiber laminated board, due to its good fire-retardant, low-dielectric and heat-insulated properties, as well as to high-performance PCB.

### PRIOR ART

Regarding the previous fire-retardant technique of epoxy resin, a halogen compound (i.e. tetrabromo bisphenol A) was added to endow its fire-retardant property while the epoxy resin was synthesized or the epoxy resin material was prepared. Brominated epoxy resin is widely used for fire-retardant electronic material due to its excellent fire-retardant property; however, some corrosive or toxic carcinogens (i.e. bromine hydride (HBr), tetrabromobiphenyl dioxin, and tetrabrom biphenyl) are emitted when a halogen fire-retardant agent is used during combustion, so it has been banned by the environmental protection law. From the environmental protection point of view, a phosphorous fire-retardant agent is still the best choice.

In recent years, phosphorous compounds (such as 3,4,5,6-bibenzo-1,2-phosphine-2 oxide (abbreviated as DOPO hereafter) or ODOP) and phosphorous compounds and epoxy resin both have been synthesized into phosphorous resin, which is widely used to make halogen-free FR-4 copper-covered glass fiber laminated board. In general, the phosphor content is between 2.5%-3.5% in phosphorous epoxy resin; however, board flammability may approach UL 94v-0 class when the phosphor content is between 1.8%-2.7% (phosphor content is lower if there is some fire-retardant chemical (such as phenolic resin or nitrogen) compound) in its formula. Phosphorous epoxy resin is a reactive fire-retardant agent, of which halogen-free copper-covered board is made, and has better comprehensive properties. However, after lead acting as an environmental hazardous substance was banned by ROHS or POHS environmental protection law, such that the welding temperature needs to rise while PCB is made and configured; therefore, upstream material is expected to act as a high heat-resistant, thermally stable, low wet absorptive and high adhesive fire-retardant polymer; however, prescription system acting phenolic resin as a hardener still has good heat resistant characteristics and is used perfectly during preparation for lead-free PCB. Wherein, phenolic resin hardener is about 20-40% of the formula weight, which results in inadequate phosphor content and thus lacks the fire-retardant property within the formula of phosphorous epoxy resin. To handle the aforementioned issue, the synthesis reaction needs a higher phosphor content for fire-retardant assurance; such a reaction inversely results in a greater molecular weight and lower density of the hardening bridge, as well as less Tg of hardened products and a deteriorated thermal property. This fails to meet the requirements for PCB.

Recently, new technology regarding manufacturing high-phosphor phenolic resin hardener to handle the aforementioned issue has been gradually proposed and has resulted in higher Tg, better fire-retardant characteristics and a heat-resistant property, and then such phosphorous phenolic resin hardener is added into glass fiber laminated board. However, with regards to electric products whose high-frequency signal transmission is required to be much faster, it is important for phosphorous phenolic resin hardener to consistently promote low-dielectric properties.

Along with the rapid development of high-frequency electronic products and with regards to the requirements banning environmentally hazardous substances (such as lead or halogen) under the environment protection law, a much higher temperature must be maintained while PCB is configured under reflow soldering; a higher temperature becomes much stricter with more creditable material, and the high-frequency signal transmission for electronic products is required to be much faster. Therefore, upstream materials (i.e. glass fiber laminated board) are expected to have high heat-resistance, a low dielectric constant, and halogen-free and fire-retard properties; however, the product that has a resin formula while phenolic resin (novolac) acts as the hardener shall have good heat resistance and low waterabsorption, which has been gradually made into a creditable prescription system for lead-free procedures. To produce halogen-free, lead-free products, such as low dielectric glass fiber laminated board, low dielectric phosphorous phenolic hardener will become a new development trend and special focus in the future.

To handle the aforementioned issue, this invention is provided with a new phosphorous resin hardener with good fire-retardant property, heat-resistance and a low-dielectric constant under PCB lead-free procedures, and glass fiber laminated board made with its formula shall meet UL-94V0 fire-retardant requirements and have a dielectric constant of 4.0 (1 GHz). First, it absorbed some water for 2 h with the pressure cooker test (PCT); however, it does not break even after dip soldering (at 288°C) and maintains heat-resistance for more than 10 minutes.

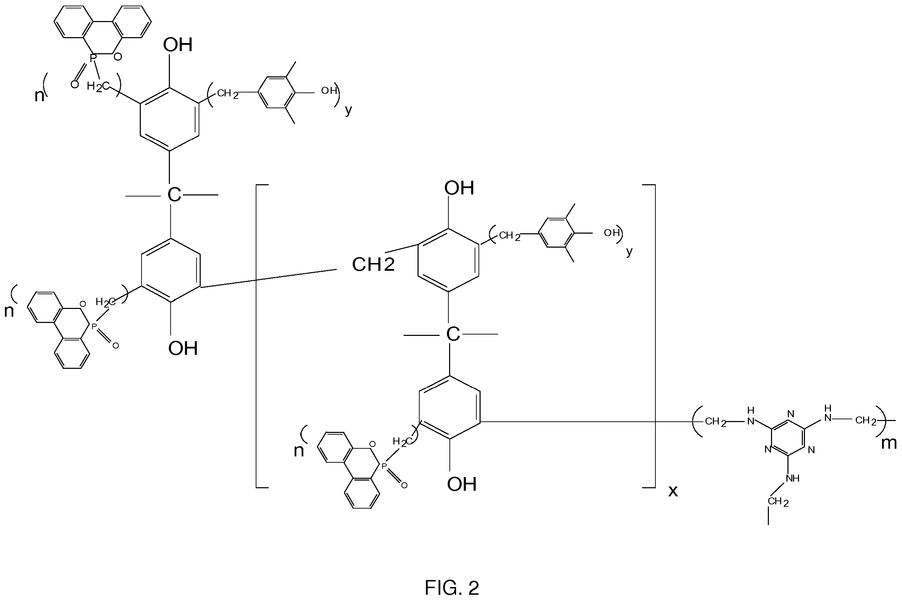

The new low-dielectric phosphorous fire-retardant phenolic hardener's molecular structure is shown in FIG. 2:
wherein n represents the average value from 0 to 2; m the average value from 0 to 1; y the average value from 0 to 2; and x the average value from 0 to 10.

Such a new phosphorous fire-retardant phenolic hardener's (compound) molecular structure design direction is based on phosphorous compound (DOPO) and low-dielectric compound 2,6 dimethyl phenol and nitrogen compound (melamine) (with good fire-retardant effect after nitrogen & phosphor react) respectively branching into bisphenol A and bisphenol A phenolic resin polymer to create an excellent low-dielectric property and a fire-retardant effect.

US 8124716 B2 relates to phosphorous-containing compounds which are obtained by reacting (A) at least one organophosphorus compound having a group selected from the group H-P=O, the group P-H, and the group P-OH; and (B) at least one compound having the following formula: [R'(Y)m']m(X-O-R")n.

### SUMMARY OF THE INVENTION

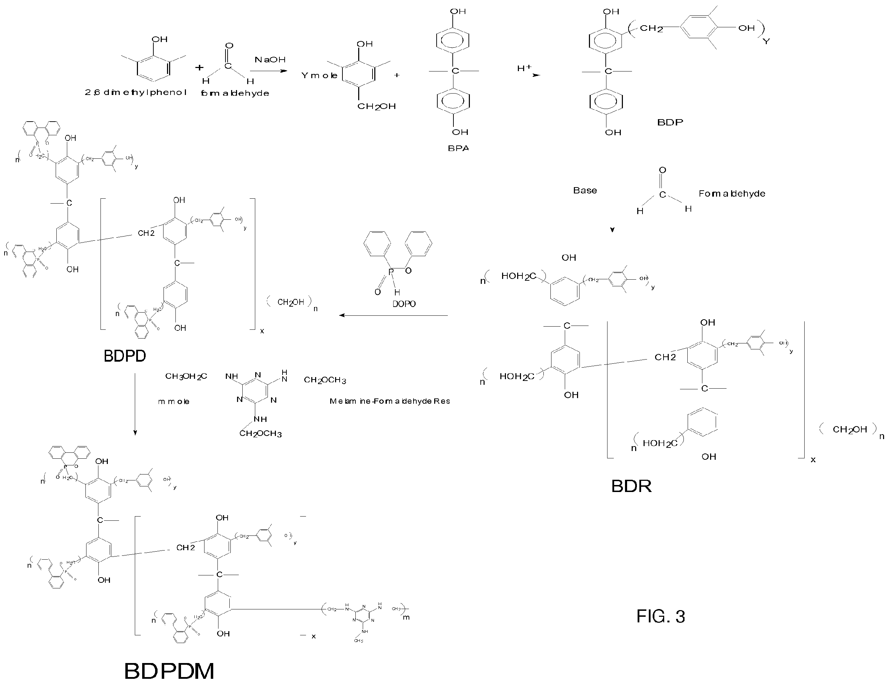

The present invention is defined by the appended claims. Preparation for such low dielectric phosphorous fire-retardant phenolic hardener is as follows: (1) 2,6 xylenol reacts with formaldehyde and generates phenolic resin compound resol in alkaline catalyst. (2) 2,6 xylenol phenolic resin is added to bisphenol A and reacts to prepare phenolic resin (Novolac) after bisphenol A branches into 2,6 xylenol phenolic resin. (3) After step (2), it is put in an alkaline catalyst and reacts with an aldehyde compound to generate phenolic resin compound (resol). Said resol dissolves into solvent and is then dipped and added into DOPO since DOPO active hydrogen has an extreme reaction with CH₂-OH of phenolic resin compound (resol) dewater and makes DOPO branch bisphenol A-2,6 xylenol resin NOVOLAC (hereinafter abbreviated BDPD). (4) Finally, high Imino-NH melamine-formaldehyde resin (commercially available under the name CYMEL-327 from Allnex) is added into the BDPD obtained from step 3, and the melamine phenolic compound reacts with the remaining CH₂-OH of BDPD resol to generate low-dielectric phosphorous fire-retardant hardener (hereinafter abbreviated BDPMD) for this invention. The reaction equation is as follows in FIG. 3:
With regards to chemical molecular structure, low-dielectric phosphorous fire-retardant hardener is accessed through 2,6 xylenol prepared under the core of this invention; said 2,6 xylenol is characterized by a highly symmetrical molecular structure, a low molecular coupling gap, good hydrophobic grouping, and a lower bioelectric constant than that of general phenolic resin (novolac hardener).

Phosphorous fire-retardant hardener for this invention can be used in a variety of industries, including PCB, EMC semi-conductor encapsulation and electric insulation material for other highly reliable motor/electronic components, as well as in good fire-retardant and thermally stable paints and adhesives.

### BRIEF DESCRIPTIONS OF DRAWINGS

FIG. 1A and FIG. 1B: As the H Nuclear magnetic resonance spectra (¹HNMR) of the low-dielectric phosphorous phenolic resin hardener¹ disclosed in the invention, the compound dissolves into DMSO-d₆ (DMSO-d₆ chemical shift δ=2.48).
   1. Chemical shift δ 0.7-1.5 represents absorption of the bisphenol A structure (CH3-C-CH3).
   2. Chemical shift δ 1.9-2.1 represents absorption of the 2,6 xylenol structure (Ph-CH).
   3. Chemical shift δ 3-3.8 represents absorption of P-CH₂-Ph and Ph-CH₂-Ph.
   4. Chemical shift δ 6.4-8 represents absorption of Ph-H.
   5. Chemical shift δ 9-9.3 represents absorption of Ph-OH.
   6. Chemical shift δ 6.2-6.4 represents of N-H.
FIG. 2 is the new low-dielectric phosphorous fire-retardant phenolic hardener's molecular structure of present invention.
FIG. 3 is the reaction equation of present invention.

### DETAILED DESCRIPTIONS

The present invention is defined by the appended claims. The explanation elaborated below shall make readers clearly understand this invention.

At the core of the invention, the highlight of the new low-dielectric phosphorous hardener proposes a phosphorous phenolic hardener (co-branched among bisphenol A (namely BPA), 2,6 xylenol (2,6 DMP) and melamine), whose chemical structure is characterized by the co-action of higher symmetrical and high-density benzene ring, poly-functional base reaction phenolic OH, and phosphor/nitrogen fire-retardant properties. Therefore, it has good fire-retardant, heat-insulating and low-dielectric properties; such a low-dielectric phosphorous hardener has a phosphor content from 5% to 9.5%, much better than from 6% to 9.5%, with a nitrogen content of 0% to 2%. In some embodiments, a phosphorous content of the low-dielectric phosphorous phenolic hardener is 8.95% and a nitrogen content of the low-dielectric phosphorous hardener is 1%.

Particularly, preparing the low-dielectric phosphorous hardener of this invention includes: (1) Add 2,6 xylenol into an alkaline catalyst to react with formaldehyde and generate phenol resin compound (resol). (2) Dip and add 2,6 xylenol resin compound (resol) in acid catalysis into bisphenol A to react with bisphenol A to prepare for phenolic resin (Novolac (hereinafter abbreviated BDP)) once bisphenol branches into 2,6 xylenol. (3) In the alkaline catalyst obtained from Step (2), it reacts with an aldehyde compound to generate resol; such resol dissolves into solvent, and then dipped and added to some DOPO. Such DOPO active hydrogen has an extreme reaction with the CH₂-OH base grouping of resol (phenolic resin compound) and dewater and makes DOPO branch into bisphenol A-2,6 xylenol resin (Novolac) (hereinafter abbreviated BDPD). (4) Finally, regarding the imino-NH melamine-formaldehyde resin, whose product name when made by Allnex is CYME-327, some of the BDPD obtained in Step (3) is added into CYME-327, the melamine formaldehyde (compound) reacts with CH₂-OH resol remained for BDPD to generate the low-dielectric phosphorous fire-retardant hardener for the invention (hereinafter abbreviated BDPDM). The detailed chemical reaction formula for preparing the low-dielectric phosphorous hardener that is the core of this invention is as follows in FIG. 3:
Regarding the detailed description for preparing the low-dielectric phosphorous hardener of this invention, steps (1) through (4) are carried out. To first obtain novolac, the 2,6 xylenol branches into bisphenol A. (1) First, 2,6 xylenol reacts with methanal by alkaline catalyst and generates resol (phenol resin compound). Wherein, 2,6 xylenol reacts with aldehyde by 1:1 to 1:1.5 relative mole; such a reaction is induced at 30-70°C for 20 min to 5 h, preferential for 2,6 xylenol that reacts with aldehyde at a rate of 1:3 to 1:4 relative mole and under 30-50°C for 20-40 min. Meanwhile, resol (2,6 xylenol resin compound) is less hydrophilic than general phenol resin compound (resol), so resol easily dissolves into methyl isobutyl ketone (MIBK), neutralizes it and separates it from liquid after it is washed with water in order to remove residual alkaline catalyst and residual aldehyde. Finally, a high return is reached, and a low return that is reached after general phenolic resin compound (resol) is hydrophilic and dissolves into water. The alkaline catalyst is not particularly limited as long as it is used to react with phenolic resin compound (resol), including alkaline catalyst obtained about businesses, for example, sodium hydrate, potassium hydrate, sodium carbonate, potassium carbonate and amine, with 1-5% poly-formaldehyde (92%) for use under comparison with that of alkaline catalyst.

For step (2), in the acid catalyst, 2,6 xylenol resin compound (resol) is respectively dipped and added into bisphenol A to make it branch into bisphenol A. 2,6 xylenol resin (resol) is dipped and added into BPA (with acid catalyst). Because 2,6 xylenol phenolic resin compound (resol) is a reactive grouping, this relatively easier control branching rate of bisphenol A prevents phenolic resin compound (resol) self-polymerization, resulting in too high of a molecular weight (2,6 xylenol phenolic resin compound (resol) self-polymerization is only for dimer), which then results in some defects of the glass fiber laminated board processing film surface and severe deterioration of the physical properties of the hardening product. Otherwise, if BPA phenolic resin compound (resol) is dipped and added after bisphenol A reacts with it by alkaline catalyst, then resol is added into 2,6 xylenol to react with each other. As one mole BPA has four moles reactive groupings, so BPA phenolic resin compound (resol) has multiple reaction groupings and creates a self-polymerized reaction, which promises to create too high of a molecular weight and results in unexpected side reactions, as well as unexpected results. The acid catalyst used in step (2) may include an acid catalyst obtained in business, for example, oxalic acid, methane sulfuric acid (MSA), toluene-p-sulfuric acid (PTSA), sulfuric acid, hydrochloric acid, phosphorous acid, etc.

To prevent 2,6 xylenol resin (resol) self-polymerization, step (2) is taken to slowly dip and add it into bisphenol A; thus, such resol reacts with bisphenol A by relative mole quantity of 1:1 to 1:2, and such reaction lasts for 2-6 h in MIBK solvent under 80-120°C. The acid catalyst is only used at a rate of 0.5%-2% bisphenol A.

Step (3) is taken to branch BPA into phenolic resin products of 2,6 xylenol (resol) (abbreviated BDP), and it reacts with aldehyde to generate resol in alkaline catalyst; such alkaline catalyst has optimal selection as a low boiling-point amine, which is removed along with water by a vacuum pump after its reaction in order to remove residual amine and aldehyde from the water layer and reduces polymerization of resol under less than 75°C. In the case NaOH acts as a catalyst, it needs to be neutralized with acid to generate a sodium salt compound, which is subsequently removed with water, but such removal may result in some of the product dissolving into water and the organic layer severely separating from the water layer after washing with water, resulting in too low of a product harvest. Such method consists of BPA branching into 2,6 xylenol phenolic resin (BDP) at a mole rate (with aldehyde) of 1:1 to 1:3 and reacts for 1-6 h at 40-80°C, a harvest rate of over 99%. The alkaline catalyst is used at a rate of 1-5% poly-formaldehyde (92%).

The resol obtained in step (3) is dissolved into propylene glycol methyl ether (PM) as a solvent, then dipped and added into DOPO to react and generate the low-dielectric phosphorous hardener (hereinafter abbreviated BDPD). The resol (hereinafter abbreviated BDR) obtained in Step (3) has considerably important characteristics after adding it into DOPO for reaction; BPA branches into 2,6 xylenol resin resol (BDR) and a mole rate (with DOP) of 1:1 to 1:3 and better reacts with it at 135-145°C. After the reaction, water is immediately removed due to the high boiling point during its reaction. In case water exists, it reduces resol's reaction with DOPO; no reaction with DOPO inversely results in the side reaction of self-polymerization between two resol elements and causes a non-reaction residual phosphorous compound. Then, too low fire-retardant and other physical properties and objective fire-retardant hardener productivity and relative issues still remain. To reduce the aforementioned side reaction, resol is gradually dipped and added into DOPO; because dipping and adding may cause the resol and water concentration in the reaction system to maintain a lower level, this thus reduces the side reaction of self-polymerization of resol (phenolic resin compound). The reaction for dipping and adding lasts between two and six hours.

Once step (3) is completed, step (4) analyzes the residual DOPO of less than 0.1% (GPC analysis of gel chromatography), and finally the high imino-NH melamine-formaldehyde resin, called CYMEL-327 when produced by ALLNEX, is added into the BDPD obtained in Step (3) at 145°C, so that melamine formaldehyde reacts with the CH₂-OH of the resol, branching melamine formaldehyde onto the BDPD compound to generate the low-dielectric phosphorous hardener of this invention. Such melamine formaldehyde reacts with bisphenol by a relative mole ratio of 0.005:1 to 0.005:1.5 and continues to react up to 185 °C for 30 minutes to 1 h and then fully reacts with the CH₂-OH base grouping not reacted. Such a low dielectric phosphorous hardener has a phosphor content of 5% to 9.5%, and a nitrogen content of 0% to 2%.

A better implementation example for this invention shall be described in the following examples.

Implementation example 0 for the synthesis of the low-dielectric phosphorous hardener in this invention:
(1) Synthesis of resol (2,6 xylenol phenolic resin compound): 121.5 g (1 mole) 2,6 xylenol, 97.2 g 92% poly-formaldehyde (3 moles), 800 g pure water, and 5.7 g 49.5% Na-OH solution are placed into a reaction tank (1000 ml) and then heated up and mixed at 45°C and reacted for 20 minutes. Afterwards, sulfur acid solution (30 g) is added for neutralization, and 230 g MIBK solvent is added for dissolution. The water layer is discharged after the liquid separates, and then what remains is washed twice with pure water (200 g). The MIBK layer is taken to obtain the MIBK solution (440 g) of 2,6 xylenol resin compound, with a return rate of 80% (analysis by HPLC hi-efficient analysis of liquid chromatography), finally obtaining resol (2,6 xylenol resin compound) for 0.75 mole.
(2) Synthesis of bisphenol A branches into 1 mole 2,6 xylenol resin (hereinafter abbreviated BDP): dissolve bisphenol A 228 g (1 mole) into 250 g MIBK solution and heat it to 115°C, then add methanesulfonic acid (70%, 2.1 g). Then the MIBK solution of resol (2,6 xylenol resin) is dipped and added by pump under a specified rating and is added into the MIBK solution of bisphenol A mentioned above, dip it for 6 h, add Na-OH (1.27 g, 49.5%) after its reaction, and then neutralize it and add 100 g water. Slowly mix it for 10 minutes at 75°C, keep it still to separate the solution, and remove the lower water layer, again add 100 g water into the upper organic phase, and wash it with water and mix it for 10 minutes; keep it still to separate the solution, wash with water twice, remove the water layer and take the organic layer from the upper one, and place it onto the rotating evaporator at 175°Cx5 torr for 3 h, remove the solvent MIBK and residual 2,6 xylenol to finally obtain 1 mole bisphenol A that branches into 0.75 mole 2,6 xylenol resin (hereinafter abbreviated BDP), with 313.5 g as the total and a return rate of 95%.
(3) Synthesis of bisphenol A branching into resol (2,6 xylenol resin) (hereinafter abbreviated BDPR): The BDPR branching into bisphenol A obtained in Step (2) above is balanced and has 300 g water added, and 92% poly-formaldehyde (97.8 g, 3 mole) added along with adding catalysis triethylamine 15 g, and reacted for 4 h at 60°C; after the reaction, gradually reduce the vacuum to 10 torr, remove water and triethylamine at 75 °C and add PM (180 g) for dissolution at 75 °C, thus obtaining 400 g resol compound (hereinafter abbreviated BDPR) branching with bisphenol, with a return rate of 99.5%.
(4) Synthesis of 2,6 xylenol resin (abbreviated as BDPD, hereafter) branching with bisphenol A: DOPO 626 g (2.9 mole) is placed into a reaction tank and heated to 140°C to dissolve the DOPO, and then 2,6 xylenol resin resol (hereinafter abbreviated BDPR) is dipped and added by a rating pump into the reaction tank, and reacted for 4 h. After the reaction, the temperature is risen to 145°C for a mature reaction for 2.5 h, then analyze for dopo residue of about 0.2%, thus obtaining 2,6 xylenol phosphorous resin (hereinafter abbreviated BDPD, 991 g) branching with bisphenol, with a return rate of 100%.
(5) Synthesis of phosphorous resin (BDPDM) that bisphenol A branches with 2,6 xylenol and methyl etherified melamine: Continue to Step (4), analyze for residual phosphorous resin (hereinafter abbreviated BDPD) that bisphenol A branches with 2,6 xylenol resin at less than 0.2%, and add methyl etherified melamine and formaldehyde (CYMEL-327, produced by ALLNEX, 90% solid in butanol, 71.7 g, 0.25 mole) at 145°C and react for 1 h; heat it to 185°C and react for 1 h; within 30 minutes after vacuum reduction of pressure and removal of solvent PM, this obtains the low-dielectric phosphorous resin hardener specified in this invention, namely phosphorous resin (hereinafter abbreviated BDPDM, 1032 g in total) that bisphenol A branches with 2,6 xylenol and methyl etherified melamine, with a phosphor content of 8.95, nitrogen content of 1% and return rate of 99.5%.

FTIR result: phenolic -OH group and amine: 3226 cm⁻¹, P=O 1197 cm⁻¹/1280 cm⁻¹, and P-O-C (aromatic hydrocarbon) 921 cm⁻¹/1117 cm⁻¹, P-C aromatic base 1431 cm⁻¹.

¹H-NMR result: Chemical shift δ 0.7-1.5 represents the absorption for CH₃-C-CH₃; Chemical shift δ 1.9-2.1 the absorption for Ph-CH₃; Chemical shift δ 3-3.8 the absorption for P-CH₂-Ph and Ph-CH₂-Ph; Chemical shift δ 6.4-8 the absorption for Ph-H. Chemical shift δ 9-9.3 the absorption for Ph-OH. Chemical shift δ 6.2-6.4 the absorption for N-H.

### Examples 1-3

The glass fiber laminated board to which the low-dielectric phosphorous fire-retardant hardener specified in this invention can be applied consists of resin varnish, which has good fire-retardant and heat-resistant characteristics and a low dielectric constant; its make-up is shown in Table (1). By solvent (i.e. PM, butanone or ketone), adjust for the prescribed contents of Varnish (solid content of 65%), prepare for glass fiber laminated board in the traditional manner, and immerse 7628 glass fiber cloth into aforesaid resin liquid; then dry it under 170°C for several minutes (including immersion temperature). Relying upon adjustment and control and the drying interval, adjust the pre-immersed body for the lowest-melting viscosity within 4000-10000 poise, overlap eight pieces of pre-immersed body into two pieces 35 um thick copper foils, and control the temperature rise procedure under 25 kg/cm².

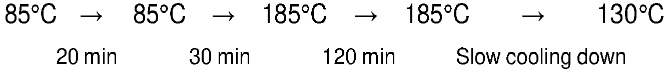

The 1.6 mm thick copper foil base board is obtained after thermal pressing.

### Comparison examples 1-2

In case of not using the low-dielectric phosphorous fire-retardant hardener specified in this invention, and regarding other fire-retardant agents for comparison, comparison example 1 applies to a Br fire-retardant agent (TBBA); comparison example 2 applies to general bisphenol A phenolic resin hardener (Nanya Plastic Company, Model: NPEH-720ha65) and phosphorous epoxy resin; its make-up is shown in Table (2).

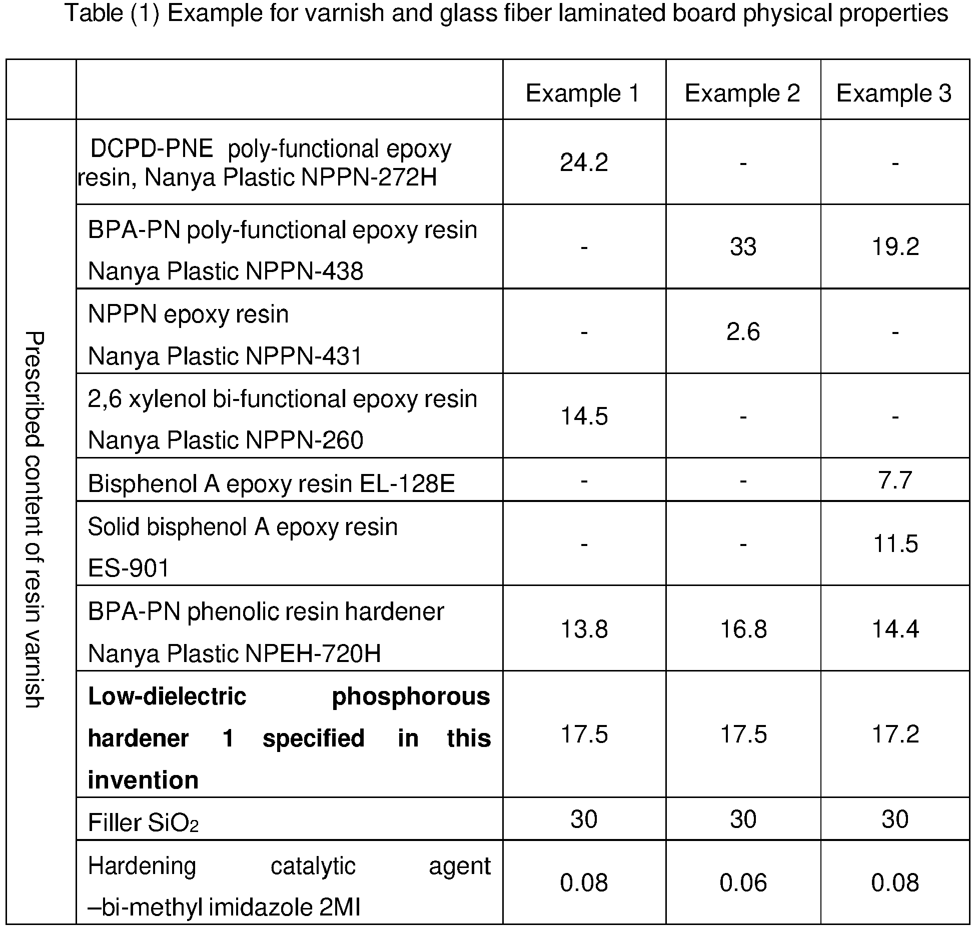

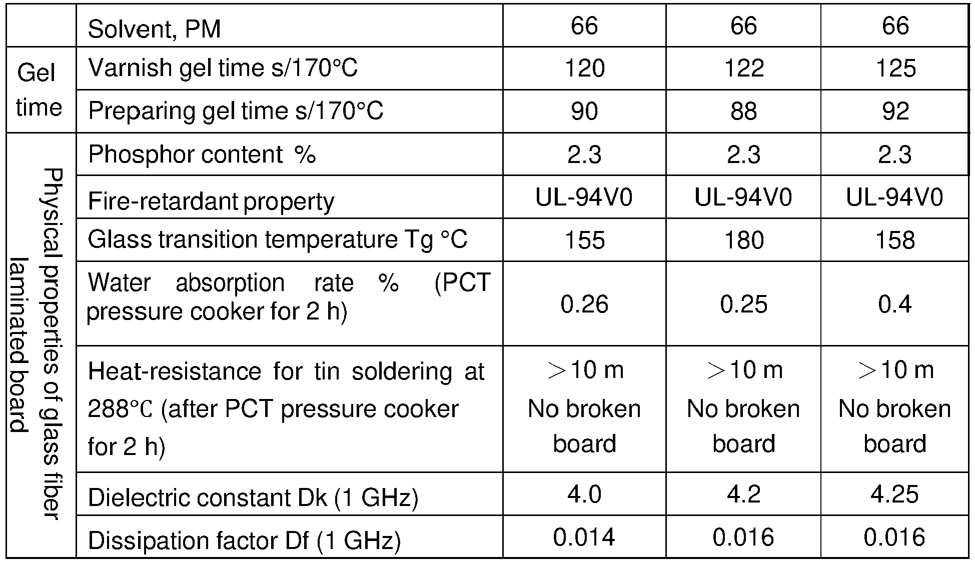

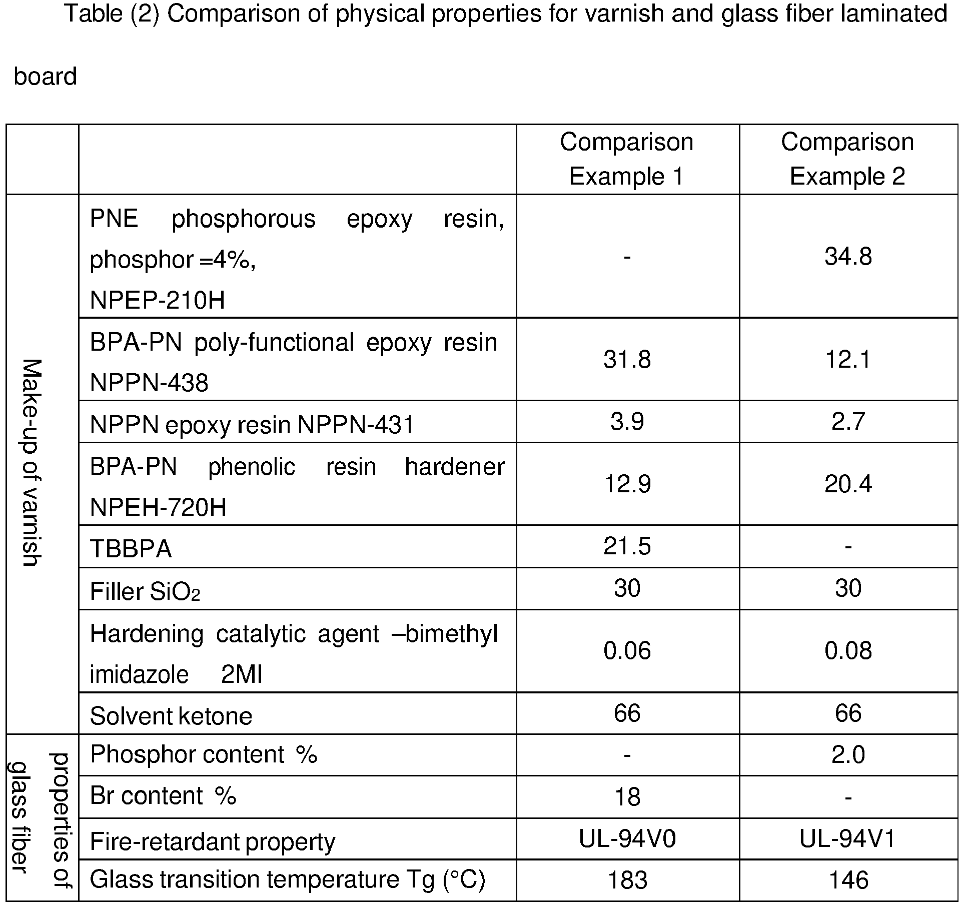

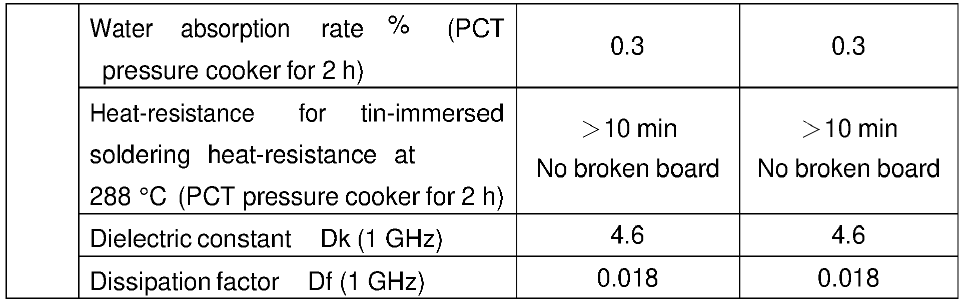

The above test results indicate that glass fiber laminated board prepared as prescribed and with the introduction of the phosphorous low-dielectric phenolic hardener specified in this invention has reduced its dielectric constant (DK) to 4.0. With the comparison examples, the dielectric constant can be reduced from 4.6 to 4.2, still indicating that this phosphorous low-dielectric phenolic hardener can reduce the dielectric constant and is applicable to PCB used for fast transmission high-frequency and high-rate signals.

### 1. Varnish gel time

The varnish reactive prepares for the varnish mixture by epoxy resin solution and hardener bi-cydiamide solution (dissolved into solvent DMF, 13.3% concentration) and catalytic agent 2-phenyl imidazole.

Or using 2-methyl imidazole solution (dissolved into solvent DMF, concentration of 14.28%), such a varnish mixture is dipped into a hot board (about 0.3 ml) at a board temperature of 170°C, and then the time it takes to gel is recorded.

### 2. Pre-immersed gel time

The pre-immersed body test method is performed to weigh its powder (0.2 mg) and is placed onto a hot board with a temperature of 170°C, and the time it takes to gel is recorded.

### 3. Test for water absorption rate (PCT pressure cooker for 2 h)

The test method of the water absorption rate is taken so that the base board is cut into a square sample piece (5 cm²) after etching and is baked for 2 h in an oven (105°C). It is placed into a pressure cooker under 2 atmx120°C, and the weight of the gas is recorded after 120 min, which, divided by the initial weight of the sample piece,
obtain its water absorption rate.

### 4. Tin-soldering resistance and heat-resistance at 288°C (PCT pressure cooker for 2 h)

This test method is taken to immerse sample tests from the pressure cooker into a tin soldering oven (288°C), and the time required by the sample broken board as it laminates is recorded.

### 5. Test of dielectric constant:

This test method is taken to use a glass fiber laminated board (5 cmx5 cm square sample piece) after the cooper foil is removed, and then bake it for 2 h in an oven (105°C), measure it with the thickness by thickness test meter, and then clamp it into the dielectric constant test meter; the value of the three points of data is taken as the average value.

### 6. Test of dissipation factor:

This test method is taken to use a glass fiber laminated board (5 cmx5 cm square sample piece) after the cooper foil is removed, and then bake it for 2 h in an oven (105°C), measure it with the thickness by thickness test meter, and then clamp it into a dielectric constant test meter; the value of the three points of data is taken as the average value.

### 7. Test of temperature of glass transition:

Using a differential scanning calorimeter, abbreviated DSC, the temperature is risen at a rate of 20°C/min.

### 8. Test of fire-retardant property

The fire-retard property of the sample is tested under the UL-94 standard method.

## Claims

1. A low-dielectric phosphorous phenolic hardener of formula (I): 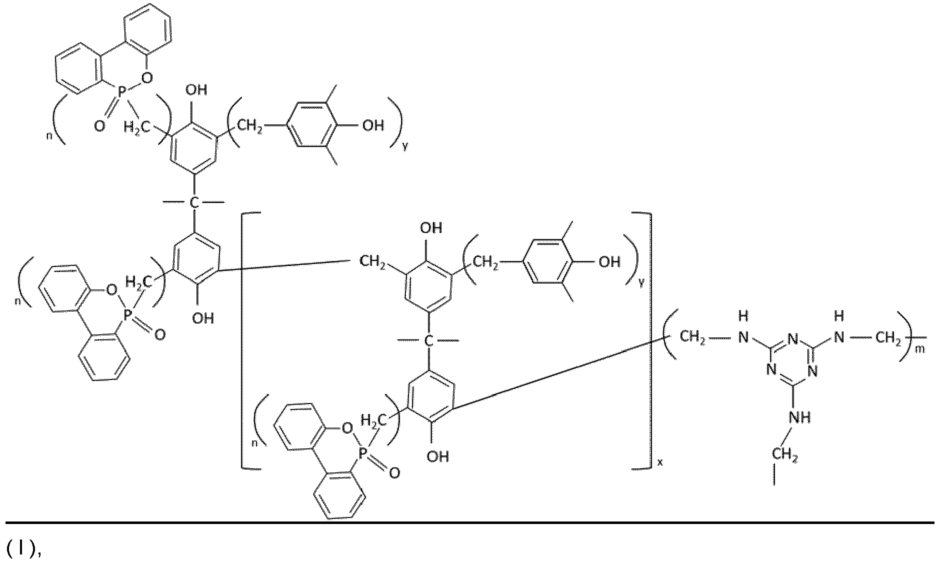 wherein n represents the average value from 0 to 2; m represents the average value from 0 to 1; y represents the average value from 0 to 2; and x represents the average value from 0 to 10; and wherein a phosphorous content of the low-dielectric phosphorous phenolic hardener is 8.95% and a nitrogen content of the low-dielectric phosphorus phenolic hardener is 1 %.

2. A process for preparing a low-dielectric phosphoric phenolic resin hardener , comprising the steps of:
(1) reacting 2,6 xylenol with formaldehyde to obtain phenolic resin (resol) under an alkaline catalytic condition, wherein 2,6 xylenol reacts with formaldehyde by a mole ratio of 1:3 to 1:4 at 30-50 °C for 20-40 min, followed by dissolving the resol into methyl isobutyl ketone (MIBK) and neutralizing them and separating the solution after washing it with water to remove the residual alkaline catalysis and aldehyde from the water layer;
(2) dipping and adding resol into bisphenol A (BPA) to make it branch into BPA under acid catalysis, comprising reacting resol with BPA with a mole ratio of 1:1 to 2:1 and under an MIBK solvent system at 80-120 °C for a period of 2-6 h, and the consumption of the acid catalysis is 0.5 to 2% bisphenol A;
(3) branching BPAonto a phenolic resin product (BDP) about 2,6 xylenol resin (resol), and reacting it with formaldehyde and generating resol under an alkaline catalyst condition, followed by separating the water using a vacuum pump and separating the residual amine and residual formaldehyde and reducing resol self-polymerization at a temperature lowerthan 75 °C, by a mole ratio of 1:1 to 1:3 and at 40-80 °C for 1-6 h, and further followed by dissolving the resol obtained into solvent (PM) and then adding it into DOPO to obtain low-dielectric phosphorous hardener (BDPD), resol (BDR) and with a DOPO mole ratio of 1:1 to 1:3, wherein the reaction temperature is lower than 135 °C and the dipping and reaction lasts for 2-6 h; and
(4) analyzing for less than 0.1% residual DOPO (by gel permeation chromatography), adding melamine formaldehyde into the BDPD obtained from step (3) at 145 °C to make it react with CH_{z}OH residual resol (BDPD) and branch it onto the BDPD compound and generate low-cost low-dielectric phosphorous hardener, wherein the melamine formaldehyde and BPA has a relative mole ratio of 0.05:1 to 0.5:1.0 and react for 1 or 2 h, wherein the temperature is further raised to 185 °C to react for 30 min to 1 h to fully react with non-reacted CH₂OH base grouping, wherein the phosphorous content of the low-dielectric phosphorous phenolic hardener is from 5% to 9.5% and the nitrogen content of the low-dielectric phosphorus phenolic hardener is 0 to 2.0 %.

3. An epoxy resin varnish composition suitable for glass fiber laminated board comprising the following:
(i) Dicyclopentadiene phenol poly-functional epoxy resin (DCPD poly-functional epoxy resin) or any other poly-functional phenolic epoxy resin, which is present in an amount of 10% to 70% of the total resin of (i)-(iv);
(ii) 2,6 xylenol phenolic bi-functional epoxy resin or any other bi-functional base epoxy resin, which is present in an amount of 0% to 30% of the total resin of (i)-(iv);
(iii) Hardener 1: phenolic resin hardener or BPA phenolic resin hardener, which is present in an amount of 0% to 30% of the total resin of (i)-(iv);
(iv) Hardener2: the low-dielectric phosphorous hardener of claim 1, which is present in an amount of 10% to 40% of the total resin of (i)-(iv);
(v) Filler: Silicone dioxide, aluminum hydroxide, which is present in an amount of 0% to 45% of the total varnish composition; and
(vi) Hardener catalysis and solvent, comprising hardener catalysis that is present in an amount of 0.01% to 0.2% (with comparison to all epoxy resin catalysis, not including hardener) and solvent with a solid content of 55% to 70%.

## Patentansprüche

1. Ein Phosphor-Phenol-Härter mit niedriger Dielektrizität der Formel (I): 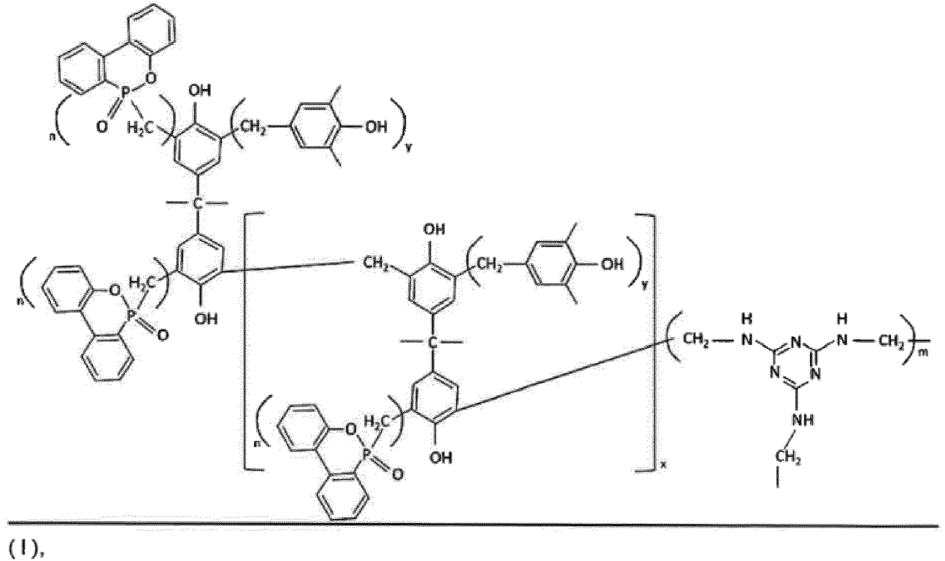 wobei n den Durchschnittswert von 0 bis 2 darstellt; m den Durchschnittswert von 0 bis 1 darstellt; y den Durchschnittswert von 0 bis 2 darstellt; und x den Durchschnittswert von 0 bis 10 darstellt; und wobei ein Phosphorgehalt des Phosphor-Phenol-Härters mit niedriger Dielektrizität 8,95% beträgt und ein Stickstoffgehalt des Phosphor-Phenol-Härters mit niedriger Dielektrizität 1 % beträgt.

2. Ein Verfahren zum Herstellen eines Phosphor-Phenolharz-Härters mit niedriger Dielektrizität, umfassend die Schritte:
(1) Reagieren von 2,6-Xylenol mit Formaldehyd unter einer alkalischen katalytischen Bedingung, um ein Phenolharz (Resol) zu erhalten, wobei 2,6-Xylenol mit Formaldehyd mit einem Molverhältnis von 1:3 bis 1:4 bei 30-50 °C für 20-40 min reagiert, gefolgt vom Lösen des Resols in Methylisobutylketon (MIBK) und Neutralisieren und Trennen der Lösung, nachdem sie mit Wasser gewaschen wurde, um die restliche alkalische Katalyse und Aldehyd aus der Wasserschicht zu entfernen;
(2) Eintauchen und Zugeben von Resol in Bisphenol A (BPA), um es unter Säurekatalyse mit BPA zu verzweigen, umfassend das Reagieren von Resol mit BPA mit einem Molverhältnis von 1:1 bis 2:1 und unter einem MIBK-Lösungsmittelsystem bei 80-120 °C für einen Zeitraum von 2-6 h, und wobei der Verbrauch der Säurekatalyse 0,5 bis 2% Bisphenol A beträgt;
(3) Verzweigen von BPA mit 2,6-Xylenolharz (Resol) zu einem Phenolharzprodukt (BDP), und Reagieren von diesem mit Formaldehyd und Erzeugen von Resol unter einer alkalischen Katalysator-Bedingung, gefolgt vom Abtrennen des Wassers mittels einer Vakuumpumpe und Abtrennen des restlichen Amins und des restlichen Formaldehyds und Reduzieren der Selbstpolymerisation von Resol bei einer Temperatur von weniger als 75 °C, mit einem Molverhältnis von 1:1 bis 1:3 und bei 40-80 °C für 1-6 h, und ferner gefolgt vom Lösen des erhaltenen Resols in einem Lösungsmittel (PM) und dann Zugeben von diesem in DOPO, um den Phosphor-Härter mit niedriger Dielektrizität (BDPD) und Resol (BDR) mit einem DOPO-Molverhältnis von 1:1 bis 1:3 zu erhalten, wobei die Reaktionstemperatur geringer als 135 °C ist und das Eintauchen und die Reaktion 2-6 h dauert; und
(4) Analysieren auf weniger als 0,1% Rest-DOPO (durch Gel-Permeations-Chromatographie), Zugeben von Melaminformaldehyd in das BDPD, das aus Schritt (3) bei 145 °C erhalten wurde, um es mit CH₂OH-Rest-Resol (BDPD) reagieren zu lassen und zu der BDPD-Verbindung zu verzweigen und den kostengünstigen Phosphor-Härter mit niedriger Dielektrizität zu erzeugen, wobei das Melaminformaldehyd und das BPA ein relatives Molverhältnis von 0,05:1 bis 0,5:1,0 aufweisen und für 1 oder 2 h reagieren, wobei die Temperatur weiter auf 185 °C erhöht wird, um für 30 min bis 1 h zu reagieren, um vollständig mit den nicht-umgesetzten CH₂OH-Basengruppierungen zu reagieren, wobei der Phosphorgehalt des Phosphor-Phenol-Härters mit niedriger Dielektrizität von 5% bis 9,5% beträgt und der Stickstoffgehalt des Phosphor-Phenol-Härters mit niedriger Dielektrizität 0 bis 2,0 % beträgt.

3. Eine Epoxidharzlackzusammensetzung, die für glasfaserlaminierte Platten geeignet ist, enthaltend das Folgende:
(i) polyfunktionelles Dicyclopentadienphenol-Epoxidharz (polyfunktionelles DCPD-Epoxidharz) oder ein beliebiges anderes polyfunktionelles phenolisches Epoxidharz, das in einer Menge von 10% bis 70% des Gesamtharzes von (i)-(iv) vorliegt;
(ii) bifunktionelles phenolisches 2,6-Xylenol-Epoxidharz oder ein beliebiges anderes bifunktionelles basisches Epoxidharz, das in einer Menge von 0% bis 30% des Gesamtharzes von (i)-(iv) vorliegt;
(iii) Härter 1: Phenolharzhärter oder BPA-Phenolharzhärter, der in einer Menge von 0% bis 30% des Gesamtharzes von (i)-(iv) vorliegt;
(iv) Härter 2: der Phosphorhärter mit niedriger Dielektrizität nach Anspruch 1, der in einer Menge von bei 10% bis 40% des Gesamtharzes von (i)-(iv) vorliegt;
(v) Füllstoff: Siliciumdioxid, Aluminiumhydroxid, das in einer Menge von 0% bis 45% der Gesamtlackzusammensetzung vorliegt; und
(vi) Härterkatalyse und Lösungsmittel, umfassend Härterkatalyse, die in einer Menge von 0,01% bis 0,2% vorliegt (im Vergleich zu allen Epoxidharzkatalysen, Härter nicht eingeschlossen), und ein Lösungsmittel mit einem Feststoffgehalt von 55% bis 70%.

## Revendications

1. Durcisseur phénolique phosphoreux faiblement diélectrique de la formule (I) : 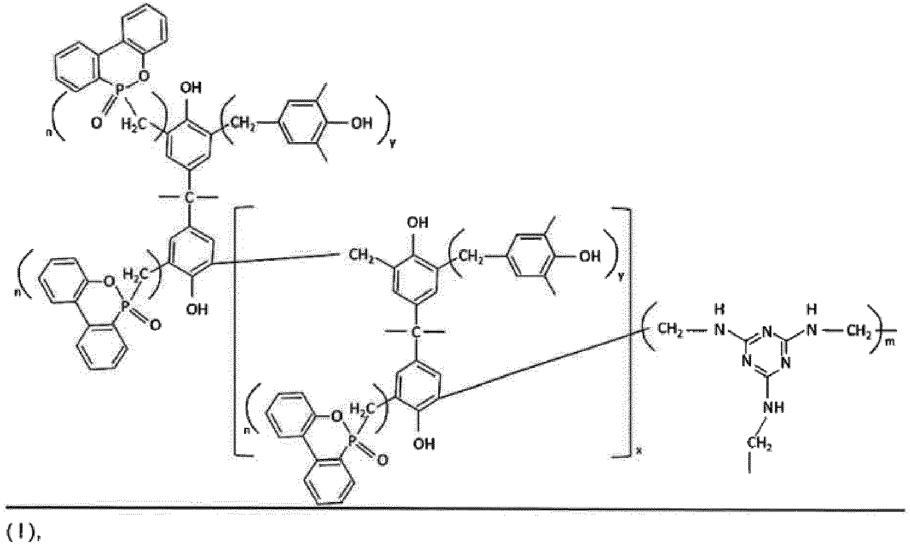 où n représente la valeur moyenne de 0 à 2 ; m représente la valeur moyenne de 0 à 1 ; y représente la valeur moyenne de 0 à 2 ; et x représente la valeur moyenne de 0 à 10 ; et où une teneur en phosphore du durcisseur phénolique phosphoreux faiblement diélectrique est de 8,95 % et une teneur en azote du durcisseur phénolique phosphoreux faiblement diélectrique est de 1 %.

2. Procédé de préparation d'un durcisseur de résine phénolique phosphorique faiblement diélectrique, comprenant les étapes suivantes :
(1) la réaction de 2,6 xylénol avec le formaldéhyde pour obtenir une résine phénolique (résol) dans une condition catalytique alcaline, où le 2,6 xylénol réagit avec le formaldéhyde dans un rapport molaire de 1:3 à 1:4 à 30-50°C pendant 20-40 minutes, suivie de la dissolution du résol dans la méthylisobutylcétone (MIBK) et de leur neutralisation et de la séparation de la solution après lavage à l'eau pour éliminer la catalyse alcaline résiduelle et l'aldéhyde de la couche d'eau ;
(2) l'immersion et l'ajout de résol dans du bisphénol A (BPA) pour le faire se ramifier en BPA sous catalyse acide, comprenant la réaction de résol avec le BPA avec un rapport molaire de 1:1 à 2:1 et sous un système de solvant MIBK à 80-120°C pendant une période de 2-6 h, et la consommation de la catalyse acide étant de 0,5 à 2 % de bisphénol A ;
(3) la ramification de BPA avec la résine de 2,6-xylénol (résol) en un produit de résine phénolique (BDP), et la réaction de celui-ci avec le formaldéhyde et la génération de résol dans une condition catalytique alcaline, suivie d'une séparation de l'eau en utilisant une pompe à vide et d'une séparation de l'amine résiduelle et du formaldéhyde résiduel et d'une réduction de l'auto-polymérisation de résol à une température inférieure à 75°C, avec un rapport molaire de 1:1 à 1:3 et à 40-80°C pendant 1-6 h, et puis suivie de la dissolution du résol obtenu dans un solvant (PM) et de l'ajout de celui-ci dans le DOPO pour obtenir un durcisseur phosphoreux faiblement diélectrique (BDPD) et un résol (BDR) et avec un rapport molaire de DOPO de 1:1 à 1:3, où la température de réaction est inférieure à 135°C et l'immersion et la réaction durent 2-6 h ; et
(4) l'analyse à moins de 0,1 % de DOPO résiduel (par chromatographie par perméation de gel), l'ajout de mélamine-formaldéhyde dans le BDPD obtenu à l'étape (3) à 145°C pour le faire réagir avec le résol CH₂OH résiduel (BDPD) et le ramifier en le composé BDPD et générer un durcisseur phosphoreux faiblement diélectrique à faible coût, où le mélamine-formaldéhyde et le BPA ont un rapport molaire relatif de 0,05:1 à 0,5:1,0 et réagir pendant 1 ou 2 heures, où la température est encore augmentée à 185°C pour réagir pendant 30 minutes à 1 heure pour réagir complètement avec le groupement de base CH₂OH qui n'a pas réagi, où la teneur en phosphore du durcisseur phénolique phosphoreux faiblement diélectrique est de 5 % à 9,5 % et la teneur en azote du durcisseur phénolique phosphoreux faiblement diélectrique est de 0 à 2,0 %.

3. Composition de vernis de résine époxy appropriée pour un panneau stratifié en fibres de verre, comprenant ce qui suit :
(i) une résine époxy polyfonctionnelle de dicyclopentadiène phénol (résine époxy polyfonctionnelle DCPD) ou toute autre résine époxy phénolique polyfonctionnelle, qui est présente en une quantité de 10 % à 70 % de la résine totale de (i)-(iv) ;
(ii) une résine époxy phénolique bifonctionnelle 2,6 xylénol ou toute autre résine époxy basique bifonctionnelle, qui est présente en une quantité de 0 % à 30 % de la résine totale de (i)-(iv) ;
(iii) durcisseur 1 : durcisseur de résine phénolique ou durcisseur de résine phénolique BPA, qui est présent en une quantité de 0 % à 30 % de la résine totale de (i)-(iv) ;
(iv) durcisseur 2 : le durcisseur phosphoreux faiblement diélectrique de la revendication 1, qui est présent en une quantité de 10 % à 40 % de la résine totale de (i) à (iv) ;
(v) charge : dioxyde de silicium, hydroxyde d'aluminium, qui est présent en une quantité de 0 % à 45 % de la composition totale de vernis ; et
(vi) catalyse de durcisseur et solvant, comprenant une catalyse de durcisseur qui est présente en une quantité de 0,01 % à 0,2 % (par rapport à toutes les catalyses de résine époxy, non compris le durcisseur) et un solvant avec une teneur en solides de 55 % à 70 %.
